# EUROPEAN PATENT APPLICATION

(11) **EP 0 866 408 A2**
(43) Date of publication of application: **23.09.1998**
(21) Application number: 98104729.3
(22) Date of filing: 16.03.1998
(51) Int. Cl.: G06F 17/30

(54) **Information system**

(30) Priority: 17.03.1997 SE 9700977
(71) Applicant: Företagsandan Sweden AB, 332 92 Gislaved (SE)
(72) Inventor: Johansson, Alf, 332 92 Gislaved (SE)
(74) Representative: Petri, Stellan

(57) **Abstract**

An information system has an input device (10, 12), a presentation device (14, 16), a processing unit (18) and a database (20) with an address register (30) for storing address information, such as name, address, telephone and telefax numbers, for legal and/or natural persons. The system provides structured access to said address information. Furthermore, the database (20) comprises a product register (40) with information relating to articles and services, and the database is also provided with control information (50), by means of which records (32) in the address register (30) may be linked to records (42) in the product register (40), as well as link information (90), by means of which records (32) in the address register (30) and/or records (42) in the product register (40) may be linked to information sources on the Internet.

## Description

### Technical Field

The present invention relates to an information system, comprising an input device, a presentation device, a processing unit and a database with an address register for storing address information, such as name, address, telephone and telefax numbers, for legal and/or natural persons, said system providing structured access to said address information.

### Description of the Prior Art

Electronic telephone books are a common example of information systems according to the above. Such information systems are based on electronic databases, in which address information is stored for a large number of companies and/or private persons. Normally, the address information is comprised by information regarding personal or company name, street address, postal address, telephone number, telefax number, electronic mail address (email address), etc. The database, which may be provided by governmental or private suppliers, may be accessed in several different ways. A simple form of access is when the user calls the supplier of the service and establishes telephone contact with a human operator. The user notifies the operator of the name of a company or person looked for, wherein the operator will search, by means of a computer terminal, for the requested address information, for instance the telephone number of the company or person in question. Some database providers additionally provide direct access for their customers to the subscriber database. Such direct access may for instance be made by the user by using a personal computer and a modem connected thereto for connecting to the computer system of the database provider. The user himself may search for the desired information via the modem connection to the computer system of the database provider by way of a program interface provided by the database provider. Alternatively, such a service may be made available to the public via the global computer network known as Internet.

If a user wants to find a suitable supplier of a certain product (such an article or a service), the infomation service described above is not always useful to the user, since the user does indeed not always know the name of the company which may provide the desired product. In such cases the user will have to make use of product catalogues, marketing brochures, etc, in order to find a supplier of the desired product. Alternatively, he may use any existing service of the Yellow Pages kind, where the companies are sorted according to different fields of business.

### Summary of the Invention

The object of the present invention is to simplify the linking of buyers and sellers of a certain product. The invention is particularly aimed at making it easier for a user to find one supplier or a plurality of suppliers, which may provide an article or service requested by the user. Furthermore, the object of the invention is to offer the user - once he has found a proper supplier - easy access to telephone and address information regarding the supplier as well as detailed information regarding the desired product. The object of the invention is furthermore to enable direct contact to the supplier or, alternatively, direct ordering of the desired product.

The objects described above are achieved by an information system according to the appended patent claims. In essence, the invention may be described in simplified terms as a telephone or address register known per se being integrated with a product register known per se for forming a new kind of database, which also contains link information for establishing contact with information sources on the Internet.

### Brief Description of the Drawings

The invention will now be described in more detail, reference being made to the accompanying drawings, in which
FIG 1 is a schematic view of a computer-based information system, in which the invention may be applied,
FIG 2 schematically illustrates a database contained in a preferred embodiment of the invention, and
FIGs 3 and 4 are screen printouts for exemplifying a user interface for the information system according to the invention.

### Detailed Disclosure of the Invention

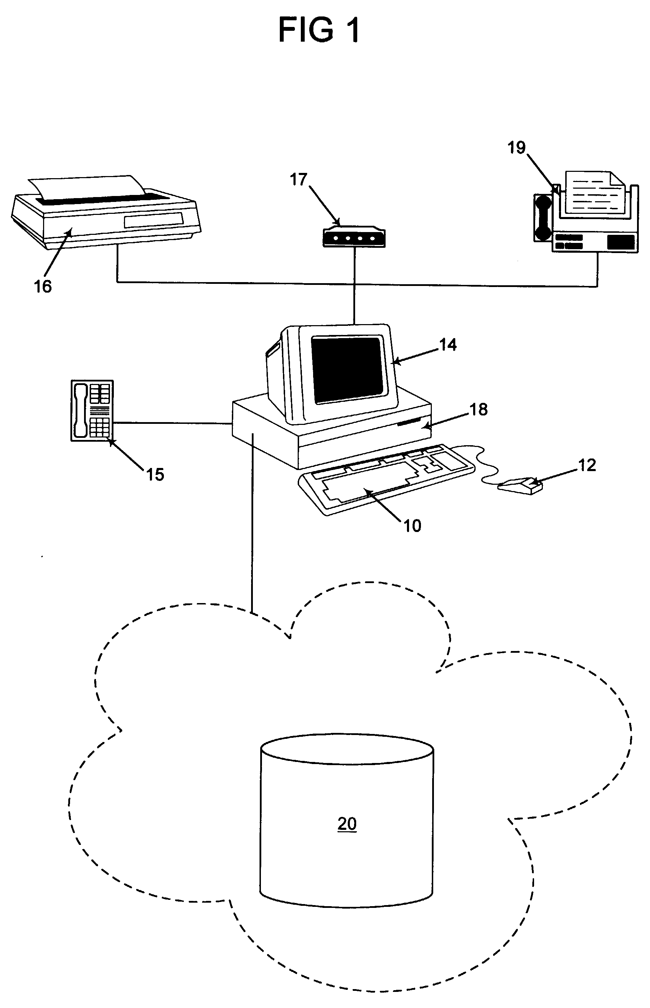

FIG 1 schematically illustrates an information system according to an embodiment of the invention. A processing unit 18, which preferably is a personal computer known per se, is connected to a keyboard 10, a mouse 12, a screen 14, a printer 16, a modem 17 as well as telecommunications equipment 15, 19, for instance a telephone and a telefax machine. Furthermore, the processing unit 18 is operatively connected to a database 20, which will be described in more detail below.

The screen 14 and the printer 16 function as presentation devices for a user of the information system, while the keyboard 10 and the mouse 12 function as input devices. The processing unit or computer 18 is provided with a suitable operating system, such as Microsoft® Windows®95 or any other operating system available on the market.

By using the modem 17 the user may establish contact between the computer 18 and other computers or computer systems via the public telephone network. Furthermore, the user may transmit and receive telefacsimile messages by means of the telefacsimile equipment 19 known per se and carry out telephone conversations by means of the computer telephone 15. It has to be pointed out that this computer system only serves as an example and that the system may be provided with other components known per se than those shown herein. Furthermore, the computer system does not have to be provided with all the devices and units described above for providing access for the user to the information system described below.

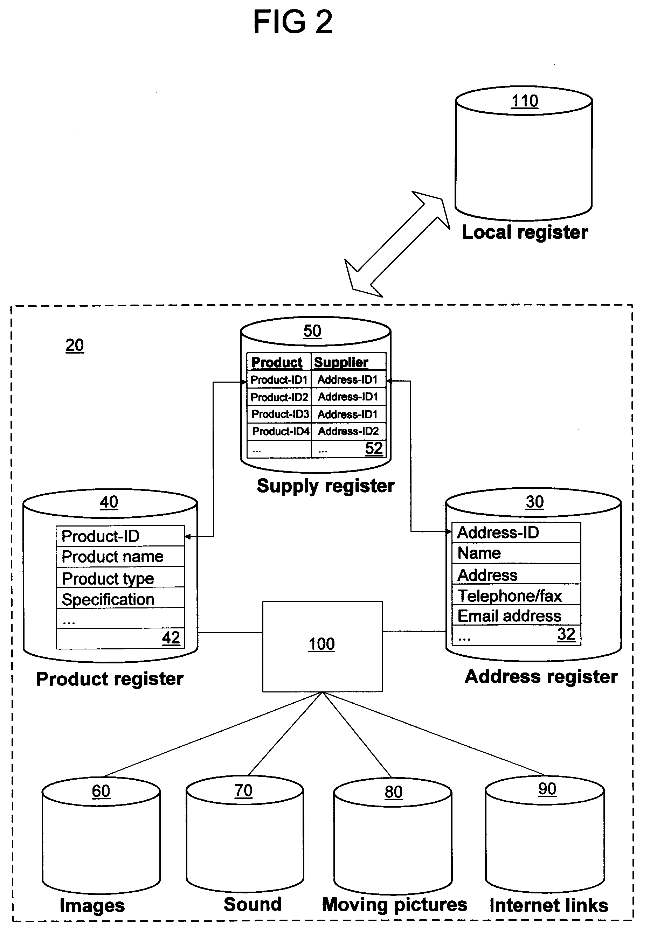

The database 20 will now be described in more detail, reference being made particularly to FIG 2. The database comprises an address register 30, the contents and structure of which essentially correspond to previously known address registers. The address register 30 has a record structure 32, which preferably comprises the following fields, among others:
- Name (company name and first name/family name for natural persons, respectively),
- Address information (street address, postal address, visiting address, etc),
- Telephone number, telefax number, etc (such as telex),
- Electronic mail address, and
- A keyfield for each record (referred to as Address-ID in the drawing), which is used for uniquely identifying the respective address record 32.

Furthermore, the database 20 comprises a product register 40, the records 42 of which preferably comprise for instance the following fields:
- Product-ID (for unique identification of the product record 42),
- Product name,
- Product type, and
- Product specification.

The address register 30 is arranged to store telephone and address information for legal and/or natural persons (companies and private persons, respectively), which supply any kind of product. The product register 40 is arranged to store information regarding such products. In this context the term product relates in principle to any kind of article or service, which is available on an open market. The address register 30 as well as the product register 40 may be read by a database engine 100, which forms the nucleus of the database 20. Preferably, the database 20 may be realized as a relational database, wherein the address register 30 and the product register 40 are realized as one or several tables each. In this case the database engine 100 is arranged to read and write data from and into the tables of the database, for instance the address register 30 and the product register 40, by means of for instance SQL-statements.

According to a preferred embodiment of the invention the database 20 is furthermore provided with a supply register 50, the records 52 of which link records 32 in the address register 30 to records 42 in the product register 40 in the way described below. For each supplier being represented by a record 32 in the address register 30 one record 52 is stored in the supply register 50 for each product provided by the supplier and being represented by a product record 42. Preferably, the supply register 50 has a record structure 52 in the form of a pair of fields, wherein the first field in each pair is constituted by a product ID corresponding to the respective product record 42 in the product register 40, while the second field in the pair is constituted by an address ID corresponding to the address record 32 in the address register 30. In the example of Fig 2 the supplier "address-ID1" is noted as supplier of the products "product-ID1", "product-ID2" and "product-ID3". The supplier "address-ID2" is noted as supplier of the product "product-ID4", etc.

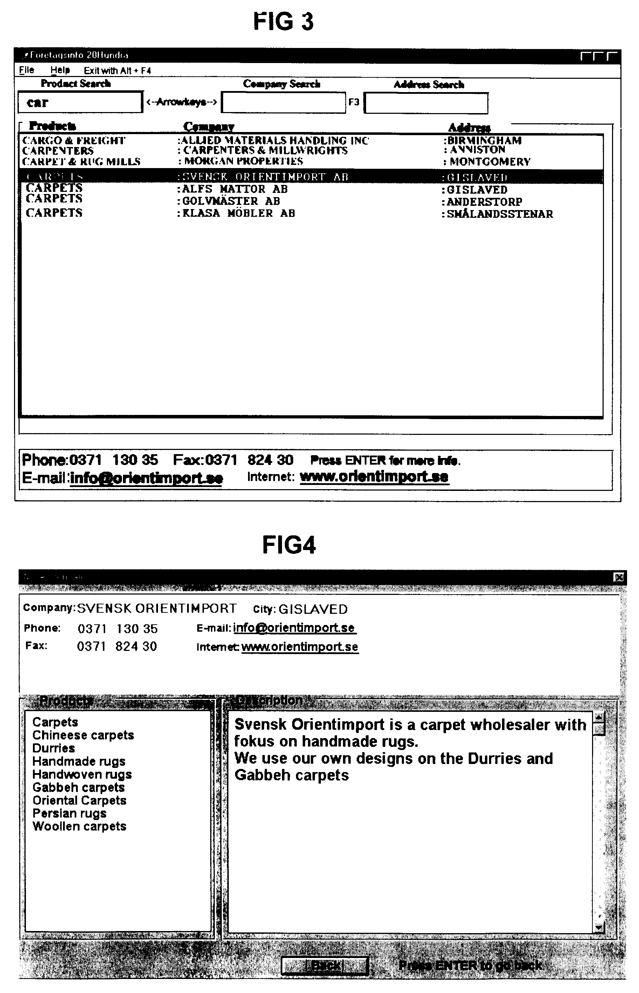

The computer 18 is provided with suitable software for accessing the combined product and address database 20. This software is preferably in the form of a window-based search program, the layout of which may for instance be as shown in FIGs 3 and 4. The search program enables the user to search for product information as well as address information. If the user knows which product he requests but does not know the company or companies, which may provide this product, he will enter the name of the requested product in the search program. This is illustrated in FIG 3, where the user searches for all products starting with the letters "car". The search program in the computer 18 calls the database engine 100, which will put together all companies providing such products from the product register 40 and the supply register 50. A list of these companies are presented on the screen 14. The user may then select any of the companies in the list, wherein more detailed information is presented to the user according to FIG 4. Preferably company information is presented by way of company name, address information, telephone number, telefax number, electronic mail address, etc. Additionally, a free-text based company profile may be shown to the user. Furthermore, a list of the products offered by the supplier in question is presented, i.e. other products provided by the company and contained in the product register 40.

Naturally, the user may use the information system and the database 20 for searching in a known way for address information relating to a company by for instance entering parts of the company name or parts of its address. The result of such a search may be presented according to FIG 4.

The database 20 may be physically stored on a storage device locally connected to the computer 18, for instance a permanent storage medium such as a harddisc or a CDROM-disc. Also other kinds of storage media are, however, equally possible.

Alternatively, the database 20 may be stored at a location physically separated from the user and the computer 18. For instance, the database 20 may be stored in a remote computer system, which may be made available to the user and the computer 18 through a local or global computer network, for instance Internet. Additionally, the user may connect to such a remote computer system through a modem connection or the like.

According to a further development of the information system the database 20 is additionally provided with digital information 60 in the form of photographs or images representing or illustrating any product present in the product register 40 or alternatively any company present in the address register 30. Furthermore, the database 20 is provided with digital sound files 70, which for instance may contain music sequences or spoken sequences for presenting a product or a company. A register 80 contains moving pictures, such as video film sequences, which in a corresponding way aim at presenting or marketing a product or a company in the information system. Finally, the database 20 is provided with a register 90 containing links to information sources on the Internet. These links are preferably in the form of URL-addresses, i.e. addresses according to the format "http://www.my_domain.com". All these registers 60, 70, 80 and 90 are connected to the database engine 100, which therefore may retrieve information from the registers and transmit the information to the search program for presentation on the screen 14. The product register 40 and/or the address register 30 may contain field keys, which uniquely link a product record 42 or an address record 32 to any record in the registers 60, 70, 80 or 90. Particularly as regards the Internet register 90, the search program may be arranged to establish automatic contact, via the Internet, with the Internet-based information source in question.

According to a further development of the information system the database 20 is also provided with a separate database 110, which is arranged to be stored locally in the computer 18 and which comprises at least an address register similar to the address register 30. The database 110 may be used by the user for storing personal address information relating to relatives, friends or other personal contacts.

Additionally, the information system may be provided with a dialling function, so that the user may establish telephone contact with the desired company or private person through the search program in the computer 18 and the computer telephone 15 connected to the computer 18. This option may for instance be used during the search for making contact with the required supplier for obtaining further product information or for ordering the product. The information system may also be provided with a function for printing out order forms, which may be sent as an electronic mail via the Internet to the supplier or may be sent as a telefacsimile message through the equipment 19. The information system may furthermore have a function for printing out for instance the search results or address labels.

The invention has been described above by way of a few preferred embodiments. However, it is to be emphasized that the disclosure has been made for exemplifying but not limiting purposes. Therefore, the invention is only limited by the definitions in the appended patent claims. Other embodiments of the invention are thus possible within its scope.

## Claims

1. Information system, comprising an input device (10, 12), a presentation device (14, 16), a processing unit (18) and a database (20) with an address register (30) for storing address information, such as name, address, telephone and telefax numbers, for legal and/or natural persons, said system providing structured access to said address informaion, **characterized** in that the database (20) comprises:
a product register (40), comprising information relating to articles and services;
control information (50), by means of which records (32) in the address register (30) are linked to records (42) in the product register (40); and
link information (90), by means of which records (32) in the address register (30) and/or records (42) in the product register (40) are linked to information sources on the Internet.

2. Information system according to claim 1, **characterized** in that
the database (20) comprises a supply register (50), containing records (52) which logically link records (32) in the address register (30) to records (42) in the product register (40); and in that the processing unit (18) is arranged to:
receive user commands relating to a required product through the input device (10, 12) and the presentation device (14, 16),
find any records (32) in the address register (30), which correspond(s) to a supplier of the product in question by means of the supply register (50), and
present to the user any information thus obtained and relating to the supply of a product.

3. Information system according to claim 1 or 2, **characterized** in that
the database (20) comprises digital data files (60, 70, 80) representing image and/or sound information relating to products and/or suppliers comprised in the database.

4. Information system according to any preceding claim, **characterized** in that
said processing unit is a computer (18), while the input device is a keyboard (10) and/or a mouse (12) and the presentation device is a computer screen (14) and/or a printer (16).

5. Information system according to any preceding claim, **characterized** in that
the database (20) is stored on permanent storage medium, such as an optical data carrier, which is locally connected to the processing unit (18).

6. Information system according to any of claims 1-4, **characterized** in that
the database (20) is stored on a medium physically separated from the processing unit (18), said medium being accessible for the processing unit via a local or global computer network.

7. Information system according to any preceding claim, **characterized** by functions for establishing automatic contact via the Internet to an information source related to the link information (90).

8. A method of offering structured access to a supplier of a required product by means of a computer (18), **characterized** by the steps of:
a) receiving a search term entered by a user, said search term being related to the required product;
b) searching for address information (32) relating to a supplier, which is noted in a database (20) to provide said product;
c) searching in a database (20) for link information (90) relating to information sources on the Internet, said link information being related to said product and/or to said address information (32); and
d) presenting the results of the searches according to b) and c) to the user by means of a presentation device (14).
